Europäisches Patentamt

European Patent Office

Office européen des brevets

(19)

(11) Veröffentlichungsnummer: **0 342 181 B1**

# (12) EUROPÄISCHE PATENTSCHRIFT

(45) Veröffentlichungstag der Patentschrift: 26.10.94

(21) Anmeldenummer: 89890128.5

(22) Anmeldetag: 28.04.89

(51) Int. Cl.5: **F16L 55/02**, F16L 9/14, F16L 9/18

---

(54) **Kunststoffrohr bzw. Rohrformstück.**

---

(30) Priorität: 11.05.88 AT 1236/88

(43) Veröffentlichungstag der Anmeldung:
15.11.89 Patentblatt 89/46

(45) Bekanntmachung des Hinweises auf die
Patenterteilung:
26.10.94 Patentblatt 94/43

(84) Benannte Vertragsstaaten:
AT BE CH DE ES FR GB GR IT LI LU NL SE

(56) Entgegenhaltungen:
EP-A- 0 182 604
EP-A- 0 254 375
CH-A- 623 390

(73) Patentinhaber: POLOPLAST Kunststoffwerk
GmbH & Co KG
Poloplaststrasse 1
A-4060 Leonding (AT)

(72) Erfinder: Borth, Rainer
Am Ipfbach 61
A-4490 St. Florian (AT)

(74) Vertreter: Beer, Otto, Dipl.-Ing. et al
Patentanwälte
Dipl.-Ing. Otto Beer
Dipl.-Ing. Manfred Beer
Lindengasse 8
Postfach 264
A-1070 Wien (AT)

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung betrifft ein Rohr oder Rohrformstück zur Abwasserentsorgung, mit einem mehrschichtigen Rohrkörper, der ein Mantelrohr und ein Mediumrohr aus Kunststoff, insbesondere einem Thermoplasten wie PVC, einem Polyolefin oder ABS, und wenigstens eine Zwischenschicht umfaßt.

Bei der Abwasserentsorgung in Gebäuden werden insbesondere einlagige Rohre bzw. Formstücke verwendet. Der Abwasseranteil in Haushalten ist durch zusätzliche Haushaltsgeräte (Waschmaschinen, Spülmaschinen usw.) gestiegen. Die Abfußmengen und somit die Abflußgeräusche haben zugenommen. Abflußrohre aus Kunststoff haben den Nachteil, daß sie im Gegensatz zu Gußeisenrohren, die aufgrund ihrer hohen Masse gute Schalldämmwerte zeigen, nahezu keine Schalldämmeigenschaften besitzen.

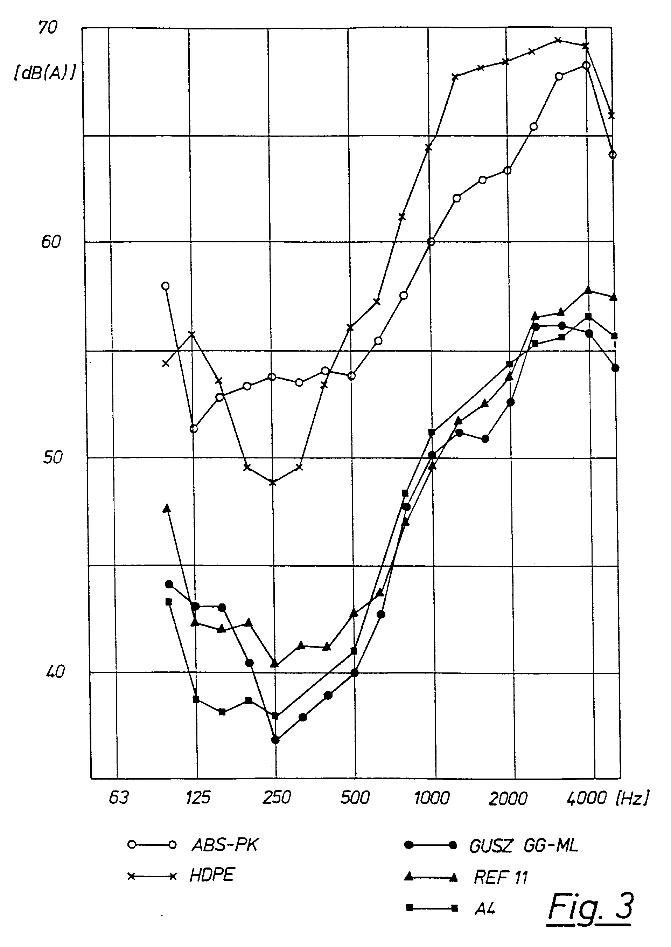

Durch eine große Schallabstrahlungsfläche und einen geringen inneren Verlustfaktor sind Kunststoffrohre schallübertragende Elemente ohne große Schalldämmung (siehe Fig. 3, Kurven im 60-70 dB-Bereich). Andere Bauelemente bei der Abwasserableitung, wie z.B. Abzweigstücke, Verbindungsstücke und Umlenkbögen sind für die Schallentstehung selbst verantwortlich. Maßnahmen zur Verringerung der Geräuschbelästigung bei Rohren bzw. Rohrbauteilen müssen daher sowohl die Schalletregung als auch die Schallübertragung bzw. Schallabstrahlung reduzieren bzw. verhindern, um so eine Gesamtverbesserung des Schallverhaltens von Kunststoffrohrleitungen zu erreichen.

Eine Schalldämmung von Rohrleitungen wird erreicht, wenn die Rohre eine hohe Masse aufweisen. Eine schalldämmende Wirkung wird aber erst bei zumindest dem vierfachen Flächengewicht gegenüber herkömmlichen Kunststoffrohren bemerkbar. Dies ist aber in bezug auf die Herstellungskosten nachteilig. So z.B. ist in der EP-A-254 375 beschrieben, Abwasserrohre aus Kunststoff, z.B. aus PVC, Polyolefinen oder ABS mit einem anorganischen Füller, vorzugsweise $BaSO_4$, zu beschweren, um eine Schalldämmung zu erzielen. Dabei wird ein Flächengewicht von mindestens 8 kg m$^{-2}$ eingestellt. Ferner ist der Einsatz schallabsorbierender Materialien, z.B. Fasern, offenzelliger Schaumstoffe od.dgl. möglich, mit welchen die Rohre umgeben werden. Von Nachteil ist dabei jedoch, daß die Schichtstärke dieser zusätzlichen Dämpfungsschichten wesentlich höher sein muß als die Rohrstärke. Schließlich kann noch eine Schwingungsdämpfung erreicht werden, indem die Schubdeformation (-zähigkeit) von speziellen Werkstoffen, die auf dem schallgebenden Element aufgebracht werden, ausgenützt wird. Auch Kombinationen dieser bekannten Maßnahmen sind bekannt. Diese bekannten Maßnahmen bieten jedoch bei Kunststoffrohren keine einfache, kostengünstige und gut schallabsorbierende bzw. schalldämmende Wirkung.

Aus der EP-A-182 604 sind vorisolierte Polyäthylenrohre bekannt, bei welchen zwischen dem Mediumrohr und dem Mantelrohr eine PU-Schaumlage vorgesehen ist. Eine derartige Schicht ist im Verwendungstemperaturbereich des Rohres nicht plastisch deformierbar. Weiterhin enthält die EP-A-182 604 keinen Hinweis auf Rohre unterschiedlicher Biegesteifigkeit und Dickenunterschiede der Rohrwandung zwischen Mediumrohr und Mantelrohr. Die EP-A-182 604 betrifft vornehmlich das Zusammenfügen der Mediumrohre mittels Schrumpfmuffen, u.a. aus Memory-Polymeren.

Erfindungsgemäß ist zur Verbesserung der Schalldämmung vorgesehen, daß das Mantelrohr und das dünnwandiger als das Mantelrohr ausgebildete Mediumrohr eine verschiedene Biegesteifigkeit aufweisen, und daß die wenigstens eine zwischen dem Mantelrohr und dem Mediumrohr eingeschlossene Zwischenschicht aus ataktischem Polypropylen (aPP), Polyisobutylen (PIB), Äthylenvinylacetat (EVA), PVC-weich (mit einem maximalen Anteil von 33% Weichmacher) oder aus einem Gemisch dieser Kunststoffe besteht.

Die Zwischenschicht haftet fest an dem Mediumrohr, dem Mantelrohr und an allenfalls vorhandenen Zwischenlagen, sodaß ein Verbundkörper erhalten wird, der durch den schichtweisen Aufbau neben den schalldämmenden Eigenschaften auch eine ausgezeichnete Festigkeit besitzt.

Bevorzugt ist die Biegesteifigkeit des Mantelrohres größer als die des Mediumrohres. Die zwischen dem Mantelrohr und dem biegeweicheren Mediumrohr vorgesehene Zwischenschicht(en) dämpft(en) die Schwingungen bzw. vermindert die Schallübertragung vom innenliegenden Mediumrohr zum außenliegenden, biegesteiferen Mantelrohr.

Der einfachste Aufbau eines erfindungsgemäßen Kunststoffrohres besteht in der Kombination Mantelrohr-Zwischenschicht-Mediumrohr. Es ist möglich, daß mehrere durch eine oder mehrere Zwichenlagen getrennte Zwischenschichten vorgesehen sind, sodaß sich z.B. ein Aufbau Mantelrohr-Zwischenschicht-Zwischenlage-(Zwischenschicht-Zwischenlage)-Zwischenschicht-Mediumrohr ergeben kann. Grenzen sind in der Praxis durch die gewünschte Wandstärke und den Materialverbrauch gesetzt.

Bevorzugt ist es, daß das Mantelrohr aus thermoplastischem Kunststoff, z.B. ABS, PVC-hart od.dgl. mit einem E-Modul von mehr als 1500 N/mm², vorzugsweise mehr als 2000 N/mm², besteht. Diese Ausbildung des Mantelrohres ergibt ein entsprechend steifes Rohr, das die nötigen Festigkeits-eigenschaften besitzt und zur Schwingungsdämpfung in Kombination mit dem Mediumrohr und der Zwischenschicht(en) beiträgt.

Das Mediumrohr besteht bevorzugt aus Polyolefinen, insbesondere aus PP, PB (Polybuten) oder Styrol-Copolymersisaten mit einem E-Modul von weniger als 1500 N/mm 2, bevorzugt 800 - 1000 N/mm$^2$.

Das Verhältnis der Biegesteifigkeit B'$_1$ des Mantelrohres zu der B'$_2$ des Mediumrohres sollte

$$1 < \frac{B'_1}{B'_2} \leq 10$$

sein.

Bevorzugt ist es, wenn das Verhältnis

$$\frac{B'_1}{B'_2}$$

für einen Frequenzberich von 1000 bis 4000 Hz zwischen 4 und 6 liegt.

Die Zwischenschicht wird vom Mantelrohr und vom Mediumrohr allseitig kraftschlüssig eingeschlossen. Sie besitzt einen hohen mechanischen Verlustfaktor und eine gute Dämpfung der Schwingungen. Durch die unterschiedlichen Biegesteifigkeiten von Mediumrohr und Mantelrohr werden Schwingungen des innenliegenden Mediumrohres in einem weiten Frequenzbereich von etwa 1000 bis 4000 Hz durch plastische Deformation der Zwischenschicht beträchtlich reduziert. Das Reduzuieren und Dämpfen der Schwingungen gelingt besonders gut, wenn das vom Schallerreger abgewandte Mantelrohr eine höhere Biegesteifigkeit besitzt als das dem Schallerreger zugewandte Mediumrohr.

Die Wandstärke des erfindungsgemäßen Kunststoffrohres kann gering gehalten werden, um bei vorgegebenem, genormtem Außendurchmesser den freien Abflußquerschnitt nicht unnötig zu verringern. Die Gesamtwandstärke des erfindungsgemäßen Rohres soll 5 mm nicht übersteigen. In der Praxis liegt sie im Bereich von 3 bis 4 mm. Das Gewicht der Rohre liegt bei etwa 4 kg/m$^2$ Rohrfläche liegen.

Im folgenden werden Ausführungsbeispiele von erfindungsgemäßen Kunststoffrohren anhand der Zeichnung näher erläutert.

Es zeigen Fig. 1 einen Schnitt durch ein dreichschichtiges Rohr, Fig. 2 einen Schnitt durch ein fünfschichtiges Rohr und Fig. 3 in einem dB(A)-Hz-Diagramm Ergebnisse von Terzbandanalysen.

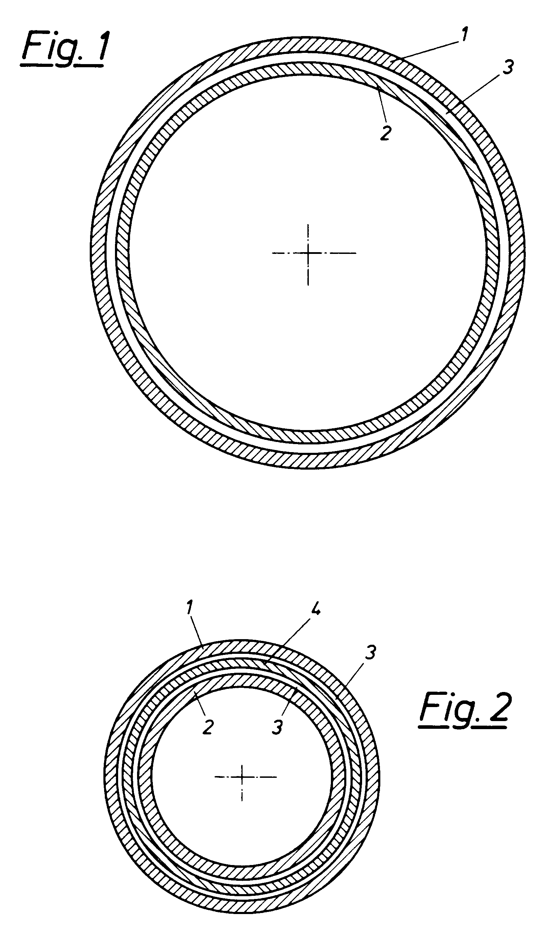

Fig. 1 zeigt einen Schnitt durch ein aus einem Mantelrohr 1, einer Zwischenschicht 3 und einem Mediumrohr 2 aufgebautes Rohr. Fig. 2 zeigt einen Rohraufbau bei dem zwischen einem Mantelrohr 1 und einem Mediumrohr 2 zwei Zwischenschichten 3 angeordnet sind, die ihrerseits durch eine Zwischenlage 4 voneinander getrennt sind.

Fig. 3 zeigt ein Diagramm mit Meßergebnissen einer Terzbandanalyse, wobei der zeitbewertete Schallpegel einer WC-Spülung und eines Waschbeckenabflusses bestimmt wurde; der Schallpegel in dB(A) wurde gegenüber der Frequenz in Hz aufgetragen. Die Kurven mit der Bezeichnung "ABSPK" und "KDPE" geben die Ergebnisse der Messung an zwei handelsüblichen Kunststoffrohren wieder. Die mit "Guß GG-ML" bezeichnete Kurve gibt die Ergebnisse der Messung an einem gußeisernen Abflußrohr wieder. die mit "A4" bezeichnete Kurve gibt die Ergebnisse der Messung an einem Rohr mit erfindungsgemäßen Zwischenschichten wieder.

Das Diagramm zeigt, daß dieses Kunststoffverbundrohr bezüglich seiner Schalldämmung mit massiven Gußeisenrohren vergleichbar ist und gegenüber handelsüblichen Kunststoffrohren eine Geräuschverminderung um mindestens 10 dB zeigt, was einer Halbierung der Schallenergie entspricht.

Das Kunststoffrohr, dessen Meßergebnisse den mit REF 11 bezeichneten Verlauf haben, war ein nicht erfindungsgemäßes Rohr, bei dem das Mediumrohr 2 und das Mantelrohr 1 aus ABS bestanden und jeweils eine Wandstärke von 2,4 mm hatten. Die Zwischenschicht 3 hat eine Stärke von etwa 1,0 mm (Gesamtwandstärke des Rohres = 5,8 mm).

Das Rohr, dessen Meßergebnisse durch die mit der Bezeichnung "A4" versehenen Kurve wiedergegeben sind, besaß ein Mediumrohr 2 aus Polypropylen mit einer Wandstärke von 1,2 mm und ein Mantelrohr 1 aus PVC mit einer Wandstärke von 2 mm. Die Zwischenschicht 3 bestand aus einer Mischung von aPP und PIB und hatte eine Stärke von 0,6 mm (Gesamtwandstärke = 3,8 mm).

Zum Herstellen der erfindungsgemäßen Kunststoffrohre werden die eingesetzten Kunststoffe, z.B. ataktisches Polypropylen, Polyisobutylen, Äthylenvinylacetat oder PVC-weich (mit einem maximalen Anteil

3

EP 0 342 181 B1

von 33 % Weichmacher) allenfalls entsprechend gemischt, durch einen Pinolen-Rohrkopf einer Drei-oder Mehrschichtkoextrusion unterworfen. Auf diese Weise können Rohre, Rohrteile und Formstücke hergestellt werden.

Die Zuschlagstoffe zu den eingesetzten Kunststoffen der Zwischenschicht tragen zur Erhöhung der Schalldämmung bei. Insbesondere vorteilhaft ist die erfindungsgemäße Zugabe von Kunststoffen, mit welchen die Dämpfung der Zwischenschicht erhöht und ihre Schalldämmeigenschaften verbessert werden können.

Folgende Tabelle gibt eine Übersicht über Flächengewichte ($G_F$) von verschiedenen Abflußrohren in $kg/m^2$ in Abhängigkeit ihrer Nennweite ($N_W$) und der erreichten Schallpegelwerte.

| $N_W$ | 1 | 2 | 3 | 4 | 5 |
|---|---|---|---|---|---|
| 70 | 1,9 | 24,0 | 3,4 | - | - |
| 100 | 2,4 | 24,3 | 4,3 | 11,0 | 7,5 |
| 125 | 2,7 | 27,8 | 4,7 | - | - |
| 150 | 3,5 | 28,1 | 5,7 | - | - |
| Schallpegelwerte $\Delta$ dB | 0 | 10-12 | 10-11 | 10-11 | 3-5 |

1 ABS-Kunststoffabflußrohre (handelsüblich) 2 Gußeisen-Abflußrohre (handelsüblich) 3 erfindungsgemäße Kunststoffverbundrohre 4 Kunststoffrohr mit Schwerschaummantel (CH-PS 628 721) 5 Kunststoffrohr - dickwandig, kompaktes PVC-hart

Man erkennt, daß eine mit den erfindungsgemäßen Rohren vergleichbare Schalldämmung nur durch ein beträchtlich höheres Flächengewicht erreicht werden kann.

Unter Flächengewicht $G_F$ versteht man das Produkt aus Querschnitt, spezifischem Gewicht und Länge eines Rohres bezogen auf 1 $m^2$.

Bevorzugt ist es erfindungsgemäß, wenn die Kunststoffrohre ein Verhältnis von Flächengewicht $G_F$ zur Nennweite $N_W$ des Rohres

$$\frac{G_F}{N_W} \cdot 100$$

zwischen 2,5 und 6, vorzugsweise 3,5 bis 5,5 aufweisen.

Die Biegefestigkeit B' errechnet sich näherungsweise unter Zuhilfenahme folgender Parameter:

B' = dyn. Biegesteifigkeit pro Längeneinheit

E' = dyn. E-Modul

Jax = axiales (Flächen)Trägheitsmoment pro Längeneinheit

da = Außendurchmesser des Rohres

di = Innendurchmesser des Rohres

$\mu$ = Poisson-Zahl

$$B' = \frac{E' \cdot Jax}{(1 - \mu^2)} \, [Nm]$$

Beispiele für die Biegefestigkeit von Rohren mit $N_W$ 100 mm:

1. Mantelrohr:

$E_1$ = 3.000 $N/mm^2$

da = 110 mm

di = 106 mm

$\mu$ = 0,31

Jax = 98,8 $cm^4$

4

$B'_1 = \underline{32\ 800\ kNcm}$

2. Mediumrohr:

$E_2 = 900\ N/mm^2$

$da = 105\ mm$

$di = 103\ mm$

$\mu = 0,34$

$Jax = 44,1\ cm^4$

$B_2' = \underline{4\ 454\ kNcm}$

Das Verhältnis der Biegesteifigkeit $B'_1$ des Mantelrohres zu der Biegesteifigkeit des Mediumrohres $(B'_1/B'_2)$ beträgt in diesem Fall 7,4.

**Patentansprüche**

1. Rohr oder Rohrformstück zur Abwasserentsorgung, mit einem mehrschichtigen Rohrkörper, der ein Mantelrohr (1) und ein Mediumrohr (2) aus Kunststoff, insbesondere einem Thermoplasten wie PVC, einem Polyolefin oder ABS, und wenigstens eine Zwischenschicht (3) umfaßt, dadurch gekennzeichnet, daß das Mantelrohr (1) und das dünnwandiger als das Mantelrohr (1) ausgebildete Mediumrohr (2) eine verschiedene Biegesteifigkeit aufweisen, und daß die wenigstens eine zwischen dem Mantelrohr (1) und dem Mediumrohr (2) eingeschlossene Zwischenschicht (3) aus ataktischem Polypropylen (aPP), Polyisobutylen (PIB), Äthylenvinylacetat (EVA), PVC-weich (mit einem maximalen Anteil von 33% Weichmacher) oder aus einem Gemisch dieser Kunststoffe besteht.

2. Rohr oder Rohrformstück nach Anspruch 1, dadurch gekennzeichnet, daß die Zwischenschicht (3) Bariumsulfat in Mengen bis zu 60 Gew.-%, vorzugsweise bis zu 40 Gew.-% enthält.

3. Rohr oder Rohrformstück nach Anspruche 1 oder 2, dadurch gekennzeichnet, daß die Zwischenschicht (3) und/oder das Mantelrohr (1) Flammhemmer, z.B. Aluminiumhydroxid $(Al(OH)_3)$ enthält.

4. Rohr oder Rohrformstück nach einem der Ansprüche 1 bis 3, dadurch gekennzeichnet, daß das Mantelrohr (1) eine größere Biegesteifigkeit als das Mediumrohr (2) besitzt, wobei für das Verhältnis der Biegesteifigkeit $(B'_1)$ des Mantelrohres (1) zu der Biegesteifigkeit $(B'_2)$ des Mediumrohres (2), vorzugsweise

$$1 < \frac{B'_1}{B'_2} \leq 10$$

gilt.

5. Rohr oder Rohrformstück nach einem der Ansprüche 1 bis 4, dadurch gekennzeichnet, daß das Verhältnis von Flächengewicht $(G_F)$ zur Nennweite $(N_W)$ des Rohrkörpers $(G_F:N_W) \cdot 100$ zwischen 2,5 und 6, vorzugsweise zwischen 3,5 und 5,5, liegt.

**Claims**

1. Pipe or pipe fitting for waste water disposal, with a multi-layer pipe body which includes a casing pipe (1) and a medium pipe (2) of plastic, in particular a thermoplastic material such as PVC, a polyolefin or ABS, and at least one intermediate layer (3), characterised in that the casing pipe (1) and the medium pipe (2) which is of thinner-walled construction than the casing pipe (1) have different bending resistance, and in that the at least one intermediate layer (3) enclosed between the casing pipe (1) and the medium pipe (2) is made of atactic polypropylene (aPP), polyisobutylene (PIB), ethylene vinyl acetate (EVA), soft PVC (with a maximum proportion of 33% softener) or a mixture of these plastics.

2. Pipe or pipe fitting according to claim 1, characterised in that the intermediate layer (3) contains barium sulphate in quantities of up to 60 wt.%, preferably up to 40 wt.%.

3. Pipe or pipe fitting according to claim 1 or 2, characterised in that the intermediate layer (3) and/or the casing pipe (1) contains flame inhibitors, e.g. aluminium hydroxide $(Al(OH)_3)$.

4. Pipe or pipe fitting according to any of claims 1 to 3, characterised in that the casing pipe (1) has a greater bending resistance than the medium pipe (2), wherein for the ratio of bending resistance $(B'_1)$ of the casing pipe (1) to bending resistance $(B'_2)$ of the medium pipe, preferably

$$ 1 \ < \ \frac{B'_1}{B'_2} \ \leq \ 10 $$

holds good.

5. Pipe or pipe fitting according to any of claims 1 to 4, characterised in that the ratio of surface density $(G_F)$ to nominal width $(N_W)$ of the pipe body $(G_F{:}N_W) \cdot 100$ is between 2.5 and 6, preferably between 3.5 and 5.5.

**Revendications**

1. Tube ou pièce d'asemblage pour tube destiné à l'évacuation des eaux usées, comportant un corps à plusieurs couches qui comprend un tube enveloppe (1) et un tube à fluide (2) en matière plastique, notamment en une matière plastique thermodurcissable telle que du PVC, une polyoléfine ou de l'ABS, et au moins une couche intermédiaire (3), caractérisé par le fait que le tube enveloppe (1) et le tube à fluide (2) dont la paroi est plus fine que que celle du tube enveloppe (1) présentent des rigidités flexionnelles différentes et par le fait que la couche intermédiaire (3), au nombre d'au moins une, insérée entre le tube enveloppe (1) et le tube à fluide (2) est en polypropylène atactique (aPP), en polyisobutylène (PIB), en acétate d'éthylène vinyle (EVA), en PVC souple (avec une proportion maximale de plastifiant de 33 %) ou en un mélange de ces matière plastiques.

2. Tube ou pièce d'asemblage pour tube selon la revendication 1, caractérisé par le fait que la couche intermédiaire (3) contient du sulfate de barium en des quantités allant jusqu'à 60 % en poids, de préférence jusqu'à 40 % en poids.

3. Tube ou pièce d'asemblage pour tube selon la revendication 1 ou 2, caractérisé par le fait que la couche intermédiaire (3) et/ou le tube enveloppe (1) contiennent des agents ignifugeants, par exemple de l'hydroxyde d'aluminium $(Al(OH)_3)$.

4. Tube ou pièce d'asemblage pour tube selon l'une des revendications 1 à 3, caractérisé par le fait que le tube enveloppe (1) présente une plus grande rigidité flexionnelle que le tube à fluide (2), le rapport de la rigidité flexionnelle $(B'_1)$ du tube enveloppe (1) à la rigidité flexionnelle $(B'_2)$ du tube à fluide (2) étant de préférence

$$ 1 \ < \ \frac{B'_1}{B'_2} \ \leq \ 10 $$

5. Tube ou pièce d'asemblage pour tube selon l'une des revendications 1 à 3, caractérisé par le fait que le rapport du poids par unité de surface $(G_F)$ à la section nominale $(N_W)$ du corps de tube, $(G_F{:}N_W) \cdot 100$, est compris entre 2,5 et 6, de préférence entre 3,5 et 5,5.

_Fig._1

_Fig._2

Fig. 3